# EUROPEAN PATENT SPECIFICATION

(11) **EP 3 996 942 B1**
(45) Date of publication and mention of the grant of the patent: **12.06.2024**
(21) Application number: 20750726.0
(22) Date of filing: 07.07.2020
(51) Int. Cl.: B60G 7/00

(54) **HYBRID SUSPENSION ARM**
HYBRIDER AUFHÄNGUNGSARM
BRAS DE SUSPENSION HYBRIDE

(30) Priority: 08.07.2019 IT 201900011178
(43) Date of publication of application: 18.05.2022
(73) Proprietor: Tiberina Solutions S.r.l., 06019 Umbertide (PG) (IT)
(72) Inventor: MINELLI, Mauro, 06019 Umbertide (PG) (IT)
(74) Representative: Ercolani, Simone Pietro
(86) International application number: PCT/IB2020/056368
(87) International publication number: WO 2021/005504

(56) References cited:
- EP-A2- 3 398 795
- WO-A1-2012/107272
- DE-A1-102007 015 616
- DE-A1-102009 014 194
- DE-A1-102015 202 085
- KR-B1- 101 393 849

## Description

### FIELD OF THE INVENTION

The present invention concerns a suspension arm (or also known under the term "arm"). In particular, such suspension arm is of the hybrid type, i.e. made by molding two components consisting of different materials, preferably metal and plastic. Such arm, normally L- or U-shaped, is equipped with two bushings and a ball joint, both integrally constrained to the arm itself. According to a first known configuration, a first bushing and the joint are constrained, respectively, to the first and second ends of the arm, whereas a second bushing is constrained to the arm in an intermediate position between the ball joint and the first bushing. According to a second known configuration, the two bushings are connected to the two ends, whereas the ball joint is constrained to the arm in an intermediate position between the two bushings. The two bushings connect the arm to the chassis of the car, whereas the ball joint directly, or indirectly, connects the arm to the wheel.

### KNOWN PRIOR ART

According to the known art, a hybrid suspension arm comprises a more resistant component made of metal material and shell-shaped, to which the two bushings and the ball joint are constrained, whereas the less resistant component, made of plastic, is injection molded on the first component, inside the shell, and used to increase the rigidity of the arm, without simultaneously increasing its weight.

A known hybrid suspension arm is described in the European Patents EP3398795 and EP3398796 in the name of Iljin Co., Ltd. According to such patents, the hybrid arm comprises a main body made of a first material, generally metal, more particularly steel or aluminum, and equipped with a first end region and a second end region. The main body has a concave inner side, a convex outer side, a first edge and a second edge opposite the first edge, with respect to the first and the second end regions. Moreover, the hybrid arm further comprises an insert made of a second material, generally plastic, coupled by injection molding to the main body, on its inner concave side. According to various embodiments described in such documents, in order to increase the coupling force between the main body and the insert, two solutions usable separately, or in combination with each other, are described. The first solution consists in making a plurality of through holes between the inner and outer sides of the main body so that the insert is molded on the concave side of the main body and also extends inside the through holes to come out thereof on the outer side of the main body and to then assume a shape such as to prevent the insert from slipping out from the inner side of the main body. In particular, the end part of the insert portion coming out of the through holes has larger dimensions than the transverse dimensions of the through holes themselves. In practice, the insert portion that is inside the through holes and the one that is combined on the outer side of the main body constitute de facto a rivet integrally constrained to the insert portion that is coupled to the inner side of the main body, thus preventing the insert from being able to be released from the main body. Always in the patents in the name of Iljin mentioned above, a second solution, consisting in folding the side edges of the main body so that they end up inside the concavity of the shell and then in injection molding the insert so that to cover such edges, is suggested. The folded edge of the main body is thus incorporated within part of the insert, once it solidifies at the end of the molding step. This solution also allows to prevent the insert from being able to easily be released from the inner side of the main body.

In the application US2010/0084834, in the name of ZF FRIEDRICHSHAFEN, the solutions suggested are substantially similar to those described in the documents in the name of Iljin mentioned above. The only difference consists in the fact that the edges of the main body are folded outside of the main body, i.e. outside of the concavity of the shell of the main body.

Such solutions are rather efficient, but however require an additional process, i.e. the inner or outer folding of the edge, or the drilling of the shell, which involves an increase in the processing times and, thus, also an increase in the final cost of the product whose economic margin is already quite small in itself. Moreover, the solution only consisting in drilling the shell and making the molded material pass through it to obtain, on the outer side of the shell, a sort of head for locking the insert in position with the main body, is not entirely efficient. Moreover, with such solutions, it is difficult to predict the behavior of the suspension arm from a numerical point of view and the manufacturer is thus forced to carry out an extensive testing campaign on the final product to verify its effective mechanical resistance.

The document DE102009014194 in the name of DAIMLER AG describes a hybrid suspension arm comprising a metal base body reinforced by a plastic reinforcing structure. The base body is made by deep-drawing. DE102009014194 discloses the preamble of claim 1.

The document DE102015202085-A1 in the name of VOLKSWAGEN AG descries a chassis component having a hybrid construction. Such component is equipped with a bearing structure made with a first material and a reinforcing component made with a second material. The reinforcing component is configured so that to reduce the aerodynamic drag of the structural component, in addition to increasing the rigidity properties of the structural component.

The document WO2012/107272 in the name of ZF FRIEDRICHSHAFEN AG describes a control arm, for example, for the suspension of the wheels of a motor vehicle. Such arm comprises at least two end regions, each having a supporting section and at least one strut section connecting the end regions, wherein the end regions and the strut region are formed together by a support beam which is drawn box-shaped and made with a semi-finished plate-shaped plastic product with reinforcing filaments. A filling body, made of injection molded plastic material able to connect the inner surfaces of the support beam to each other so that to increase resistance to cutting, is arranged inside the deep-drawn support beam.

The documents EP 3 398 795, KR 101 393 849 and DE 10 2007 015616 disclose other suspension arms.

Thus, object of the present invention is to implement a hybrid suspension arm that ensures a more efficient coupling by injection molding between the insert and the main body.

A further object of the present invention is to implement such a hybrid arm that, with respect to the known art, does not require additional machining on the main body, in particular the folding of the edges of the shell (or main body).

### SUMMARY OF THE INVENTION

These and other objects are achieved by means of a supporting hybrid suspension arm comprising a main body made of a first material and equipped with a first end region and a second end region, said main body having an inner side, an outer side, a first edge section and a second edge section which are arranged between said first end region and said second end region, opposite each other, said hybrid arm further comprising at least one insert made of a second material and being coupled by injection molding to said main body, said insert comprising a first portion combined with said inner side of said main body, characterized in that said insert further comprises at least one second filiform connecting portion combined with said outer side of said main body to connect two regions of said first portion to each other respectively arranged at said first edge section and said second edge section.

Thanks to such solution, the insert will be more firmly constrained to the main body since said at least one second filiform section acts like a brace to hold the first portion integrally constrained to the inner side of the main body. In substance, the insert envelops the main body both on the inner side and on the outer side, thus creating a three-dimensional structure inside which the main body is housed.

Moreover, said main body is further equipped with at least one passage between said inner side and said outer side of said main body, wherein said insert comprises a third portion protruding from said first portion through said at least one passage and which comprises at least one head combined with said outer side of said main body and is connected in at least one first zone to said second filiform portion.

This allows to reduce the total length of said at least one second portion, thus reinforcing it between the two edges of the main body.

In particular, said at least one head has larger dimensions than the transverse dimensions of said at least one passage.

According to the invention, said inner side is substantially concave and said outer side is substantially convex. In practice, said first edge section and said second edge section are curved with respect to the central part of the main body so that to achieve a shell.

Moreover, said outer side comprises at least one stiffening recessing area.

Still, said at least one first portion is combined with, and at least partly covers said first and said second edge sections of said main body, at least partly extending on said outer side of said main body, at least at said two regions of the first portion.

Moreover, said at least one passage and/or said at least one recessing portion is/are made along the longitudinal centre line of said main body.

The transverse section of the main body is thus "M" shaped at said recessing area and "U" shaped where such recessing area is absent.

Always according to the invention, said at least one head of said third portion is arranged at said recessing portion on said outer side. The head of said third portion of the insert is thus at about half the length of a second filiform portion.

According to a particular aspect of the invention, said insert comprises at least one fourth filiform portion connecting said at least one second filiform portion to said at least one head of said third portion, and/or connecting the heads of two third consecutive portions, in at least a second zone, and is combined by injection molding with said outer side of said main body.

According to the invention, the hybrid arm comprises a first bushing integrally constrained to said first end region of said main body, a ball j oint integrally constrained to said second end region of said main body, and at least one second bushing combined with said main body along said second edge section.

Moreover, said insert is made of plastic material.

Still, said main body is made of metal material, preferably steel or aluminum. Finally, said first filiform portion and/or said second filiform portion and/or said fourth portion has/have reticular shape.

This way, the second portions and the fourth portions of the insert practically create a lattice on the outer side of the main body, which defines as a whole, together with the lattice already present on the inner side of the main body and with the third portions, a three-dimensional lattice that envelops also only partially the main body.

### DESCRIPTION OF THE FIGURES

These and other aspects of the present invention will become clearer in the following detailed description of a preferred embodiment provided herein, by way of example only and without limitations, with reference to the accompanying figures, in which:
figure 1A is an axonometric top view of the hybrid arm according to the invention;
figure 1B is an axonometric bottom view of the hybrid arm according to the invention;
figure 2A is an axonometric top view of the main body of the hybrid arm of figure 1A;
figure 2B is an axonometric bottom view of the main body of the hybrid arm of figure 1A;
figure 3A is an axonometric top view of the insert of figure 1A;
figure 3B is an axonometric bottom view of the insert of figure 1A;
figure 4A is a top view of the hybrid arm of figure 1A;
figure 4B is a cross-sectional view of the arm of figure 4A;
figure 4C is a second cross-sectional view of the arm of figure 4A;
figure 4D is a third cross-sectional view of the arm of figure 4A.

### DETAILED DESCRIPTION OF A PREFERRED EMBODIMENT OF THE PRESENT INVENTION

With particular reference to such figures, 1 denotes a hybrid arm according to the invention.

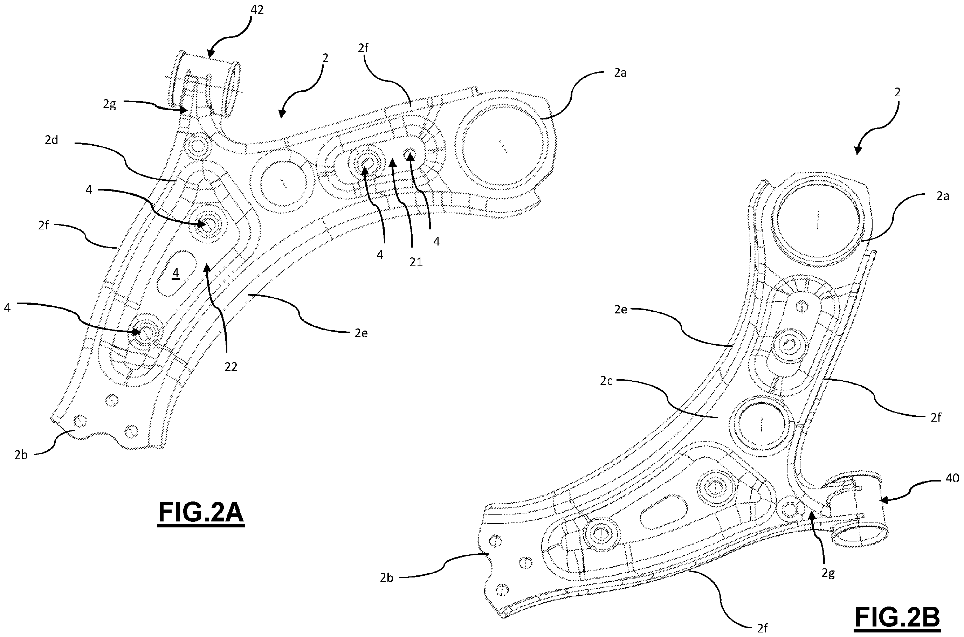

According to the invention, the supporting hybrid suspension arm 1 comprises a main body 2 made of a first material, such as metal, in particular steel, and equipped with a first end region 2a and a second end region 2b. The main body 2, according to the embodiment described herein, has a slightly curved "L" shape. It should be underlined that a main body 2 also made of aluminum, or another material, and/or having a U shape, such as for example in the event of upper suspension arms, would anyhow fall within the protection scope of the present invention. The main body 2, better depicted individually in figures 2A and 2B, has an inner side 2c, an outer side 2d, a first edge section 2e and a second edge section 2f, wherein the first edge section 2e and the second edge section 2f are arranged between the first end region 2a and the second end region 2b, opposite each other. A first bushing 40 is integrally constrained to the main body 2 at the first end region 2a, whereas a ball joint 41 is integrally constrained to the main body 2 at the second end region 2b. The second edge section 2f is not continuous, but has an interruption at about half of its length at a protrusion 2g to which the housing 42 of the second bushing 43 is integrally constrained. The two bushings 40 and 43 connect the arm 1 to the chassis of the car (not shown herein), whereas the ball joint 41 directly or indirectly connects the arm 1 to the wheel (not shown herein).

The hybrid arm 1 further comprises an insert 3 made of a second material, such as for example plastic, preferably a composite plastic material having, for example, a polyamine matrix, and coupled by injection molding to the main body 2. Advantageously, the second material has a specific weight lower than the specific weight of the first material.

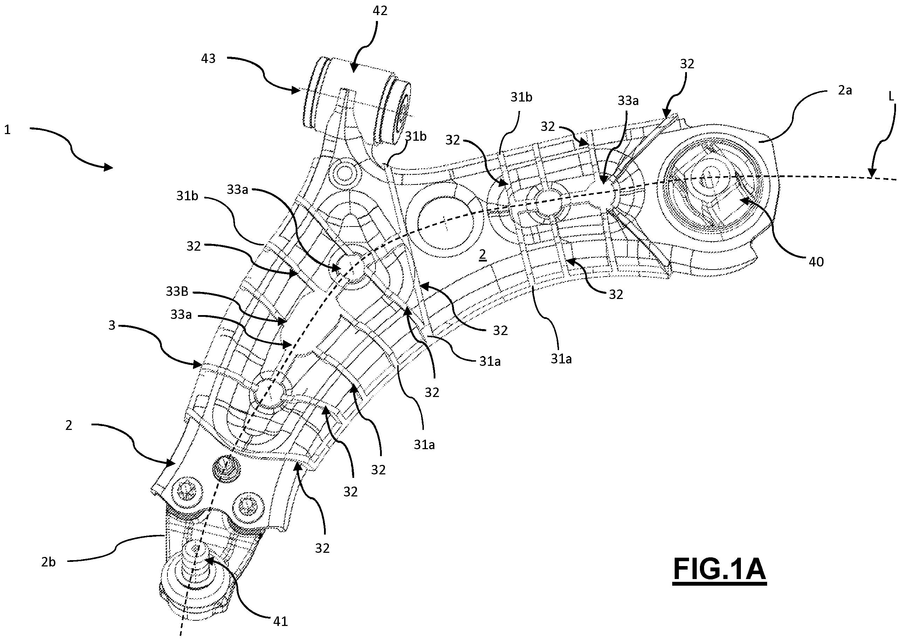

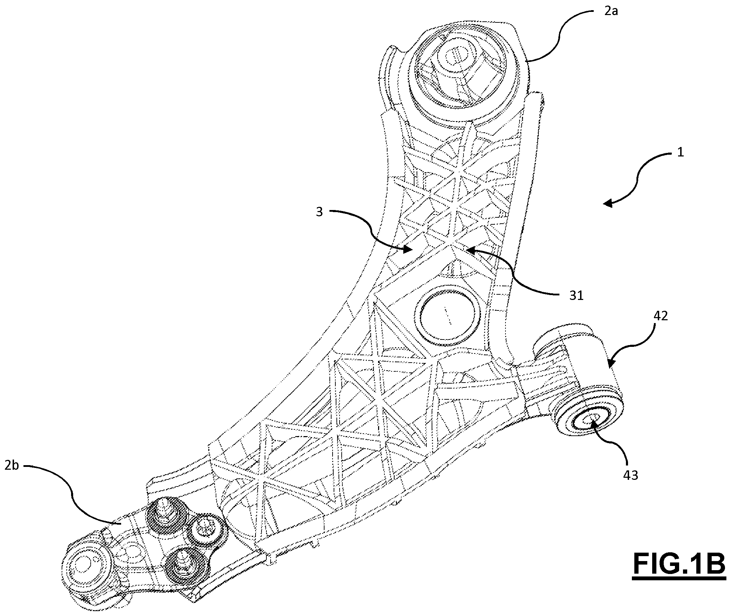

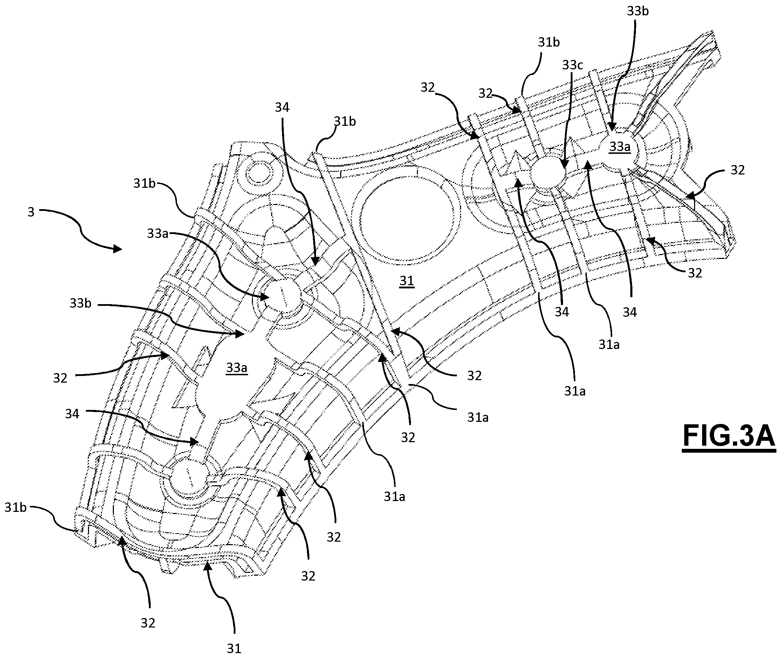

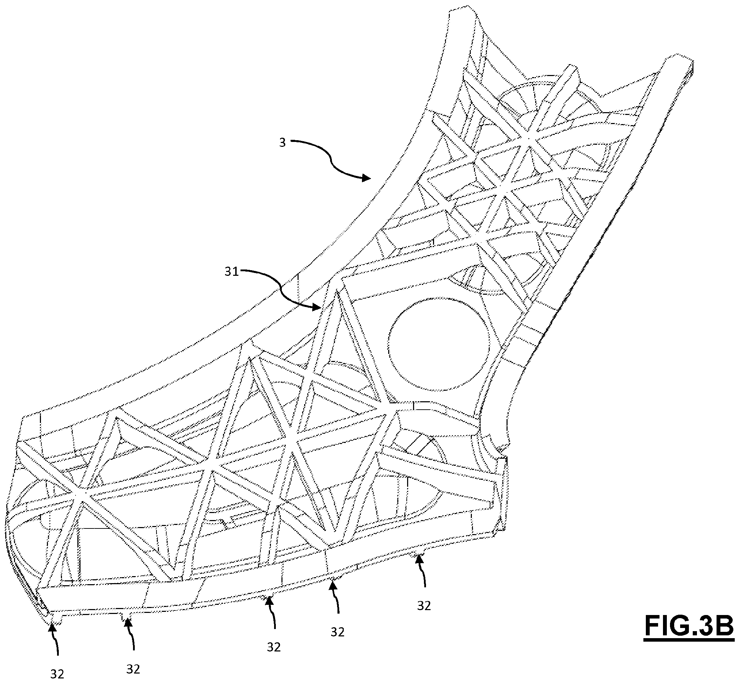

Always according to the invention, the insert 3 comprises a first portion 31 combined, by injection molding, with the inner side 2c of the main body 2 (see figure 1B). Such first portion 31 preferably has reticular shape, as shown in figure 3B.

Advantageously, the insert 3 further comprises ten second filiform connecting portions 32 combined with the outer side 2d of the main body 2 to connect two regions 31a and 3 1b of the first portion 31 of the insert 3 to each other respectively arranged at the first edge section 2e and the second edge section 2f of the main body 2. Preferably, such two regions 31a, 31b of the first portion 31 are not only on respective opposite edges 2f and 2e, but approximately along the cross section of the longitudinal centre line L of the arm 1.

Thanks to this solution, the insert 3 will be more firmly constrained to the main body 2 since said second filiform portions 32 act like braces to hold integrally the first portion 31 to the inner side 2c of the main body 2.

It should be noted that the number of second filiform portions 32 can also be different than ten without thereby departing from the protection scope of the present invention. According to the embodiment shown in the accompanying figures, the main body 2 is further equipped with five passages 4 between the inner side 2c and the outer side 2d of the main body 2. The insert 3 further comprises five third portions 33, each protruding from the first portion 31 towards the respective passage 4 and comprising at least one head 33a combined with the outer side 2d of the main body 2 and connected in at least one first zone 33b to said one or more second filiform portions 32. Such solution allows to considerably increase both the fastening force of the first portion 31 to the inner side 2c of the main body 3 and to increase the mechanical seal of the second filiform portions 32 of the insert 3, since they increase their mechanical resistance at the heads 33a of the third portion 33.

Still according to the invention, the head 33a of each third portion 33 has larger dimensions than the transverse dimensions of each passage 4. This way, the third portion operates as if it were a rivet integrally constrained to the first portion 31 of the insert 3.

Moreover, according to the invention, the inner side 2c of the main body 3 is substantially concave, whereas the outer side 2d is substantially convex. In practice, the final shape of the main body 2 is that of a shell, wherein the first edge section 2e and the second edge section 2f are curved in direction of the inner side 2c of the main body 3 so that to make the inner side 2c substantially concave and the outer side 2d substantially convex.

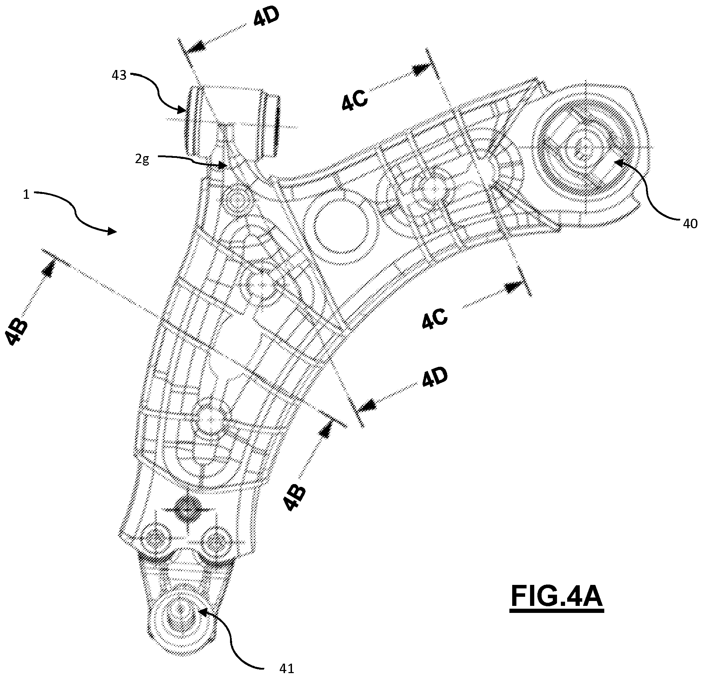

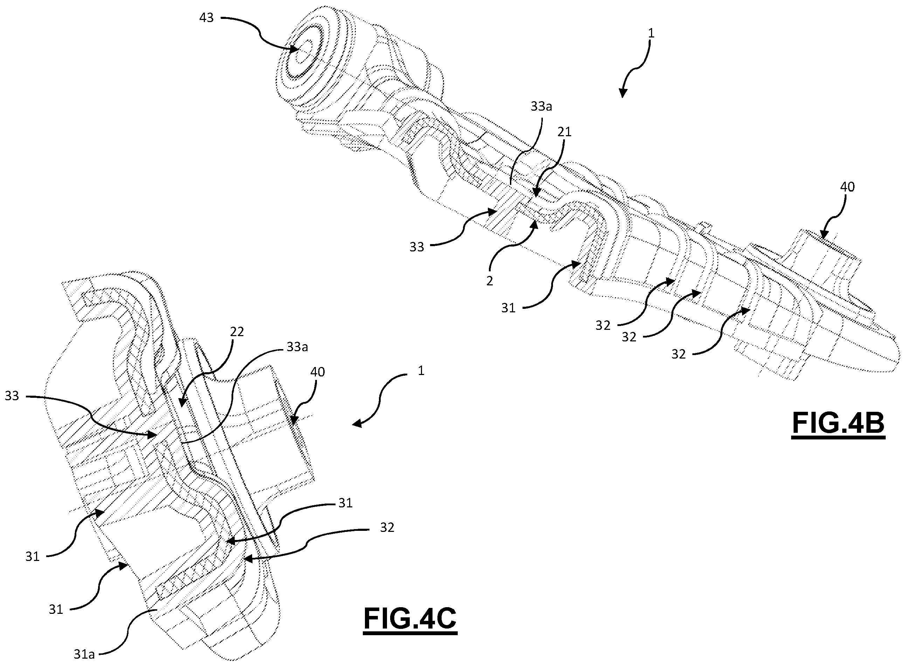

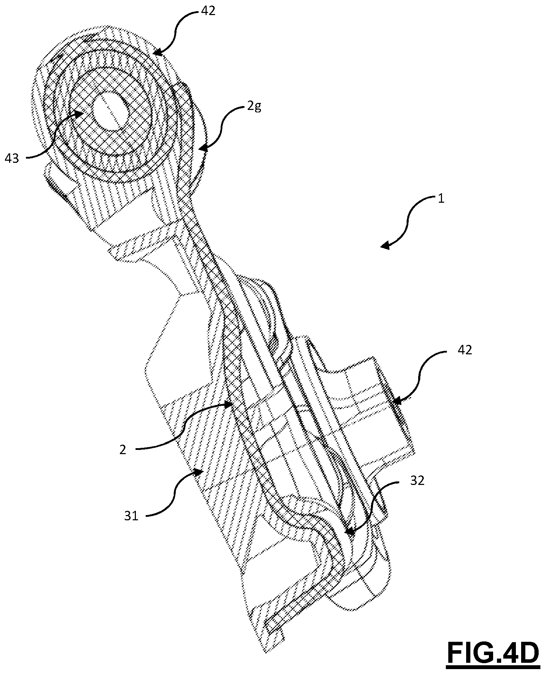

According to the embodiment described herein, the outer side 2d further comprises two stiffening recessing areas 21 and 22. The cross section of the main body 2 thus assumes an M shape at the two stiffening areas 21 and 22, as on the other hand shown in figures 2A, 2B, 4B and 4C. In the remaining zones of the main body 2, the cross section of the shell 2 is substantially U-shaped.

Always according to the embodiment described in the accompanying figures, the first portion 31 of the insert 3 is combined with, and almost completely covers the first edge section 2e and the second edge section 2f of the main body 2, extending at least partly on the outer side 2d of the main body 2, at least at the two regions 31a and 31b of the first portion 31 of the insert 3 due to the joining of this first portion 31 with each second filiform portions 32.

Preferably, the passages 4 and the stiffening portions 21 and 22 are made along the centre line L of the main body 2.

The five third portions 33 are arranged at the two recessing portions 21 and 22 at the outer side 2d of the main body 2.

Still, the insert 3 comprises a plurality of fourth filiform portions 34, five in number in the embodiment, which connect two second filiform portions 32 at the head 33a of some third portions 33, and in three cases two heads 33a of two third portions 33 to each other, at least at one second zone 33c. Such fourth portion 34 is combined, by injection molding, with the outer side 2s of the main body 2 and increases the resistance of the second portions 32 and, ultimately, also the coupling efficiency between the insert 3 and the main body 2. In fact, the second portions 32 and the fourth portions 34 of the insert 3 in practice create a lattice on the outer side 2d of the main body 2, which define as a whole, together with the lattice already present on the inner side 2c of the main body 2 and with the third portions 33, a three-dimensional lattice that envelops also only partially the main body 2, thus ensuring the maximum fastening efficacy of the insert 3 to the main body 2.

## Claims

1. Supporting hybrid suspension arm (1) comprising a main body (2) made of a first material and equipped with a first end region (2a) and a second end region (2b), said main body having an inner side (2c), an outer side (2d), a first edge section (2e) and a second edge section (2f) which are arranged between said first end region (2a) and said second end region (2b), opposite each other, wherein said inner side (2c) is substantially concave and said outer side (2d) is substantially convex, said hybrid arm further comprising at least one insert (3) made of a second material and being coupled by injection molding to said main body (2), said insert (3) comprising a first portion (31) combined with said inner side (2c) of said main body (2), **characterized in that** said insert further comprises at least one second filiform connecting portion (32) combined with said outer side (2d) of said main body to connect two regions (31a, 31b) of said first portion (31) to each other respectively arranged at said first edge section (2e) and said second edge portion (2f).

2. Hybrid arm according to claim 1, **characterized in that** said main body (2) is further equipped with at least one passage (4) between said inner side (2c) and said outer side (2d) of said main body (2), said insert comprising a third portion (33) protruding from said first portion (31) through said at least one passage (4) and comprising at least one head (33a) combined with said outer side (2d) of said main body (2) and being connected in at least one first zone (33b) to said second filiform portion (32).

3. Hybrid arm according to claim 2, **characterized in that** said at least one head (33a) has larger dimensions than the transverse dimensions of said at least one passage (4).

4. Hybrid arm according to one or more of claims 1 to 3, **characterized in that** said outer side (2d) comprises at least one stiffening recessing area (21, 22).

5. Hybrid arm according to one or more of claims 1 to 4, **characterized in that** said at least first portion (31) is combined with, and at least partly covers said first and said second edges of said main body (2), at least partly extending on said outer side (2d) of said main body (2) at least at said two regions (3 la, 3 lb) of said first portion (31).

6. Hybrid arm according to at least claim 2, **characterized in that** said at least one passage (4) is made along the centre line (L) of said main body (2).

7. Hybrid arm according to at least claim 4, **characterized in that** said at least one recessing portion (21, 22) is made along the centre line (L) of said main body (2).

8. Hybrid arm according to at least claim 2 and one or more of claims 5 to 7, **characterized in that** said at least one third portion (33) is arranged at said recessing portion (21, 22) along said outer side (2d).

9. Hybrid arm according to at least on claim 2, **characterized in that** said insert (3) comprises at least one fourth filiform portion (34) connecting said at least one second filiform portion (32) to said at least one head (33a) of said third portion (33), and/or connecting the heads (33a) of two third consecutive portions (33), at least at a second zone (33c), and is combined by injection molding with said outer side (2d) of said main body (2).

10. Hybrid arm (1) according to one or more of the preceding claims, **characterized by** comprising at least one first bushing (40) integrally constrained to said first end region (2a) of said main body (2), a ball joint (41) integrally constrained to said second end region (2b) of said main body (2), and at least one second bushing (43) combined with said main body (2) along said second edge section (2f).

11. Hybrid arm (1) according to one or more of the preceding claims, **characterized in that** said insert (3) is made of plastic material.

12. Hybrid arm (1) according to one or more of the preceding claims, **characterized in that** said main body (2) is made of metal material.

13. Hybrid arm (1) according to one or more of the preceding claims, **characterized in that** said first portion (31) and/or said second portion has/have a reticular shape.

14. Hybrid arm (1) according at least on claim 9, **characterized in that** said fourth portion has a reticular shape.

## Patentansprüche

1. Tragender Hybrid-Aufhängungsarm (1), aufweisend einen Hauptkörper (2) aus einem ersten Material und ausgestattet mit einem ersten Endbereich (2a) und einem zweiten Endbereich (2b), wobei der Hauptkörper eine Innenseite (2c), eine Außenseite (2d), einen ersten Randabschnitt (2e) und einen zweiten Randabschnitt (2f) aufweist, die zwischen dem ersten Endbereich (2a) und dem zweiten Endbereich (2b) einander gegenüberliegend angeordnet sind, wobei die Innenseite (2c) im Wesentlichen konkav und die Außenseite (2d) im Wesentlichen konvex ist, wobei der Hybridarm ferner mindestens einen Einsatz (3) umfasst, der aus einem zweiten Material besteht und durch Spritzgießen mit dem Hauptkörper (2) verbunden ist, wobei der Einsatz (3) einen ersten Abschnitt (31) umfasst, der mit der Innenseite (2c) des Hauptkörpers (2) verbunden ist, **dadurch gekennzeichnet, dass** der Einsatz ferner mindestens einen zweiten fadenförmigen Verbindungsabschnitt (32) umfasst, der mit der Außenseite (2d) des Hauptkörpers verbunden ist, um zwei Bereiche (31a, 31b) des ersten Abschnitts (31) miteinander zu verbinden, die jeweils an dem ersten Randabschnitt (2e) und dem zweiten Randabschnitt (2f) angeordnet sind.

2. Hybridarm nach Anspruch 1, **dadurch gekennzeichnet, dass** der Hauptkörper (2) außerdem mit mindestens einem Durchgang (4) zwischen der Innenseite (2c) und der Außenseite (2d) des Hauptkörpers (2) ausgestattet ist, wobei der Einsatz einen dritten Abschnitt (33) umfasst, der von dem ersten Abschnitt (31) durch den mindestens einen Durchgang (4) hervorsteht und mindestens einen Kopf (33a) umfasst, der mit der Außenseite (2d) des Hauptkörpers (2) verbunden ist und in mindestens einer ersten Zone (33b) mit dem zweiten fadenförmigen Abschnitt (32) verbunden ist.

3. Hybridarm nach Anspruch 2, **dadurch gekennzeichnet, dass** der mindestens eine Kopf (33a) größere Abmessungen als die Querabmessungen des mindestens einen Durchgangs (4) aufweist.

4. Hybridarm nach einem oder mehreren der Ansprüche 1 bis 3, **dadurch gekennzeichnet, dass** die Außenseite (2d) mindestens einen versteifenden Aussparungsbereich (21, 22) aufweist.

5. Hybridarm nach einem oder mehreren der Ansprüche 1 bis 4, **dadurch gekennzeichnet, dass** der zumindest erste Abschnitt (31) mit den ersten und zweiten Rändern des Hauptkörpers (2) verbunden ist und diese zumindest teilweise bedeckt, wobei er sich zumindest an den beiden Bereichen (31a, 31b) des ersten Abschnitts (31) zumindest teilweise über die Außenseite (2d) des Hauptkörpers (2) erstreckt.

6. Hybridarm nach zumindest Anspruch 2, **dadurch gekennzeichnet, dass** der mindestens eine Durchgang (4) entlang die Mittellinie (L) des Hauptkörpers (2) hergestellt ist.

7. Hybridarm nach zumindest Anspruch 4, **dadurch gekennzeichnet, dass** der mindestens eine Aussparungsabschnitt (21, 22) entlang die Mittellinie (L) des Hauptkörpers (2) hergestellt ist.

8. Hybridarm nach zumindest Anspruch 2 und einem oder mehreren der Ansprüche 5 bis 7, **dadurch gekennzeichnet, dass** der mindestens eine dritte Abschnitt (33) an dem Aussparungsabschnitt (21, 22) entlang der Außenseite (2d) angeordnet ist.

9. Hybridarm nach mindestens Anspruch 2, **dadurch gekennzeichnet, dass** der Einsatz (3) mindestens einen vierten fadenförmigen Abschnitt (34) umfasst, der den mindestens einen zweiten fadenförmigen Abschnitt (32) mit dem mindestens einen Kopf (33a) des dritten Abschnitts (33) verbindet und/oder die Köpfe (33a) von zwei dritten aufeinanderfolgender Abschnitte (33) zumindest in einer zweiten Zone (33c) verbindet und durch Spritzgießen mit der Außenseite (2d) des Hauptkörpers (2) verbunden ist.

10. Hybridarm (1) nach einem oder mehreren der vorhergehenden Ansprüche, **dadurch gekennzeichnet, dass** er mindestens eine erste Buchse (40), die integral mit dem ersten Endbereich (2a) des Hauptkörpers (2) verbunden ist, ein Kugelgelenk (41), das integral mit dem zweiten Endbereich (2b) des Hauptkörpers (2) verbunden ist, und mindestens eine zweite Buchse (43), die entlang des zweiten Randabschnitts (2f) mit dem Hauptkörper (2) verbunden ist, umfasst.

11. Hybridarm (1) nach einem oder mehreren der vorhergehenden Ansprüche, **dadurch gekennzeichnet, dass** der Einsatz (3) aus Kunststoff besteht.

12. Hybridarm (1) nach einem oder mehreren der vorhergehenden Ansprüche, **dadurch gekennzeichnet, dass** der Hauptkörper (2) aus metallischem Material besteht.

13. Hybridarm (1) nach einem oder mehreren der vorhergehenden Ansprüche, **dadurch gekennzeichnet, dass** der erste Abschnitt (31) und/oder der zweite Abschnitt eine netzförmige Gestalt aufweist/aufweisen.

14. Hybridarm (1) nach Anspruch 9, **dadurch gekennzeichnet, dass** der vierte Abschnitt eine netzförmige Gestalt aufweist.

## Revendications

1. Bras de suspension hybride de support (1) comprenant un corps principal (2) constitué d'un premier matériau et équipé d'une première région d'extrémité (2a) et d'une seconde région d'extrémité (2b), ledit corps principal ayant un côté interne (2c), un côté externe (2d), une première section de bord (2e) et une seconde section de bord (2f) qui sont disposées entre ladite première région d'extrémité (2a) et ladite seconde région d'extrémité (2b), à l'opposé l'une de l'autre, dans lequel ledit côté interne (2c) est sensiblement concave et ledit côté externe (2d) est sensiblement convexe, ledit bras hybride comprend en outre au moins un insert (3) constitué d'un second matériau et couplé par moulage par injection audit corps principal (2), ledit insert (3) comprenant une première portion (31) combinée audit côté interne (2c) dudit corps principal (2), **caractérisé en ce que** ledit insert comprend en outre au moins une seconde portion de connexion filiforme (32) combinée avec ledit côté externe (2d) dudit corps principal pour connecter deux régions (31a, 31b) de ladite première portion (31) l'une à l'autre, respectivement disposées au niveau de ladite première section de bord (2e) et de ladite seconde portion de bord (2f).

2. Bras hybride selon la revendication 1, **caractérisé en ce que** ledit corps principal (2) est en outre équipé d'au moins un passage (4) entre ledit côté interne (2c) et ladite côté externe (2d) dudit corps principal (2), ledit insert comprenant une troisième portion (33) faisant saillie de ladite première portion (31) à travers ledit au moins un passage (4) et comprenant au moins une tête (33a) combinée audit côté externe (2d) dudit corps principal (2) et étant reliée dans au moins une première zone (33b) à ladite seconde portion filiforme (32).

3. Bras hybride selon la revendication 2, **caractérisé en ce que** ladite au moins une tête (33a) a des dimensions supérieures aux dimensions transversales dudit au moins un passage (4).

4. Bras hybride selon l'une ou plusieurs des revendications 1 à 3, **caractérisé en ce que** ledit côté externe (2d) comprend au moins une zone d'évidement de raidissement (21, 22).

5. Bras hybride selon une ou plusieurs des revendications 1 à 4, **caractérisé en ce que** ladite au moins première portion (31) est combinée avec, et couvre au moins partiellement lesdits premier et second bords dudit corps principal (2), s'étendant au moins partiellement sur ledit côté externe (2d) dudit corps principal (2) au moins au niveau desdites deux régions (31a, 31b) de ladite première portion (31).

6. Bras hybride selon au moins la revendication 2, **caractérisé en ce que** ledit au moins un passage (4) est réalisé le long de la ligne centrale (L) dudit corps principal (2).

7. Bras hybride selon au moins la revendication 4, **caractérisé en ce que** ladite au moins une portion évidée (21, 22) est réalisée le long de la ligne centrale (L) dudit corps principal (2).

8. Bras hybride selon au moins la revendication 2 et une ou plusieurs des revendications 5 à 7, **caractérisé en ce que** ladite au moins une troisième portion (33) est disposée au niveau de ladite portion évidée (21, 22) le long dudit côté externe (2d).

9. Bras hybride selon au moins une revendication 2, **caractérisé en ce que** ledit insert (3) comprend au moins une quatrième portion filiforme (34) reliant ladite au moins une seconde portion filiforme (32) à ladite au moins une tête (33a) de ladite troisième portion (33), et/ou reliant les têtes (33a) de deux troisièmes portions consécutives (33), au moins au niveau d'une seconde zone (33c), et est combiné par moulage par injection avec ledit côté externe (2d) dudit corps principal (2).

10. Bras hybride (1) selon l'une ou plusieurs des revendications précédentes, **caractérisé en ce qu'**il comprend au moins une première douille (40) intégralement contrainte à ladite première région d'extrémité (2a) dudit corps principal (2), une rotule (41) intégralement contrainte à ladite seconde région d'extrémité (2b) dudit corps principal (2), et au moins une seconde douille (43) combinée audit corps principal (2) le long de ladite seconde section de bord (2f).

11. Bras hybride (1) selon l'une ou plusieurs des revendications précédentes, **caractérisé en ce que** ledit insert (3) est constitué d'un matériau en plastique.

12. Bras hybride (1) selon l'une ou plusieurs des revendications précédentes, **caractérisé en ce que** ledit corps principal (2) est constitué d'un matériau métallique.

13. Bras hybride (1) selon l'une ou plusieurs des revendications précédentes, **caractérisé en ce que** ladite première portion (31) et/ou ladite seconde portion a/ont une forme réticulaire.

14. Bras hybride (1) selon au moins la revendication 9, **caractérisé en ce que** ladite quatrième portion a une forme réticulaire.
